# EUROPEAN PATENT APPLICATION

(11) **EP 3 020 542 A1**
(43) Date of publication of application: **18.05.2016**
(21) Application number: 14306805.4
(22) Date of filing: 13.11.2014
(51) Int. Cl.: B29D 11/00

(54) **Method for controlling a lens manufacturing method**

(71) Applicant: ESSILOR INTERNATIONAL (COMPAGNIE GENERALE D'OPTIQUE), 94220 Charenton-le-Pont (FR)
(72) Inventor: Callier, Benoit, 94220 CHARENTON-LE-PONT (FR); Cazal, Benoit, 94220 CHARENTON-LE-PONT (FR); Herfort, David, 94220 CHARENTON-LE-PONT (FR); Larue, Philippe, 94220 CHARENTON-LE-PONT (FR); Belly, Jean-François, 94220 CHARENTON-LE-PONT (FR); Martin, Guillaume, 94220 CHARENTON-LE-PONT (FR); Picat, Victor, 94220 CHARENTON-LE-PONT (FR)
(74) Representative: Cabinet Novitech

(57) **Abstract**

A method for controlling a lens manufacturing method comprising the steps of:
a) providing (20) a master article manufactured according to a manufacturing method using a manufacturing device,
b) measuring (22) by using at least a gloss measuring device at least one gloss parameter of the master article of step a),
c) recording (24) the value of the gloss parameter,
d) repeating regularly step a) to c) and checking (28) the evolution of the gloss parameter over time,
wherein:
- the evolution of at least one parameter of the manufacturing device and/or of the manufacturing method used during the lens manufacturing method is checked over time, and
- the evolution over time of at least one gloss parameter of the master article is related with the evolution over time of the at least one parameter of the manufacturing device and/or of the manufacturing method.

## Description

The invention relates to a method for controlling a lens manufacturing method, a corresponding control device and a lens manufacturing method controlled by such method. The invention further relates to a computer program product comprising one or more stored sequence of instruction that is accessible to a processor and which, when executed by the processor, causes the processor to carry out the steps of the methods according to the invention.

Optical lenses, and in particular ophthalmic lenses, require very high quality standard, therefore very high quality manufacturing method is to be used in order to obtain high quality optical lenses.

Different methods for checking the quality of the manufactured lenses can be used.

The one by one method consists in checking the manufactured lenses one by one. Such a method does not meet demands of low-cost, high-volume, high-yield rapid production.

Therefore a quality checking method that would check the quality of a small fraction of the produced lens would not be reliable and particularly in the case of lens produced using a digital surfacing method.

Therefore, there is a need for an efficient and reliable method to assure the quality of the manufactured lenses.

Thus, one object of the present invention is to provide a method for controlling the quality of the manufactured lenses while avoiding a cosmetic evaluation without objective criteria.

To this end, the invention proposes a method for controlling a lens manufacturing method comprising the steps of:
a) providing a master article manufactured according to a manufacturing method using a manufacturing device,
b) measuring by using at least a gloss measuring device at least one gloss parameter of the master article of step a),
c) recording the value of the gloss parameter,
d) repeating regularly step a) to c) and checking the evolution of the gloss parameter over time,
wherein:
- the evolution of at least one parameter of the manufacturing device and/or of the manufacturing method used during the lens manufacturing method is checked over time, and
- the evolution over time of at least one gloss parameter of the master article is related with the evolution over time of the at least one parameter of the manufacturing device and/or of the manufacturing method.

Advantageously, such method allows to reliably checking the quality of the lenses that are produced without having to check each lens individually. Indeed, the evolution of the measured gloss parameter over time will give an indication of the reliability of the manufacturing method, in particular of the manufacturing devices, and therefore the quality of the manufactured lenses.

According to further embodiments which can be considered alone or in combination:
- the method further comprises a step of fixing the master article of step a) in a predetermined position by using a lens positioning device;
- the method further comprises a step of determining at least one correlation law between the evolution of a measured gloss parameter and the evolution of a parameter of the manufacturing device and/or of the manufacturing method;
- the method further comprises a step of determining at least one correlation law between at least one measured gloss parameter and the surface roughness of the master article;
- the or each of the at least one gloss parameter is measured in a zone around a predetermined point on a surface of the master article;
- the or each of the at least one gloss parameter is measured at a predetermined point with an incidence angle between 60° and 90° and preferably about 85° on the surface of the master article;
- the master article has at least a plan surface and the or each of the at least one gloss parameter is measured on the plan surface of the master article; and
- the manufacturing device is a generator or a polishing device.

The invention further relates to a method for controlling a lens manufacturing method comprising the steps of:
a) receiving a set of data corresponding to values of at least one measured gloss parameter and of at least one parameter of the manufacturing device used during the lens manufacturing process, and
b) comparing the received set of data with a predetermined correlation law and predetermined tolerance upper and lower thresholds.

According to an embodiment, the method further comprises a step of generating an alert if the received measured values are not between the predetermined tolerance lower and upper thresholds.

According to a further aspect, the invention relates to a manufacturing method for manufacturing a lens using a manufacturing device comprising the steps of:
- providing a lens blank,
- blocking the lens blank,
- surfacing at least one surface of the lens blank, characterized in that the manufacturing method is checked by a method according to the invention.

According to a further aspect, the invention relates to a control device for controlling a lens manufacturing method, the device comprising:
- at least a gloss measuring device adapted to measure at least one gloss parameter of a master article, the master article being manufactured according to a manufacturing process using a manufacturing device,
- a recording mean adapted to record over time the values of the measured gloss parameters and of at least one parameter of the manufacturing device used during the lens manufacturing process.

According to further embodiments which can be considered alone or in combination:
- the control device further comprises a lens positioning device adapted to fix a master article in a predetermined position; and
- the control device further comprises a determining mean adapted to determine at least one correlation law between the evolution of a measured gloss parameter and the evolution of a parameter of the manufacturing device.

The invention further relates to a computer program product comprising one or more stored sequences of instructions that are accessible to a processor and which, when executed by the processor, causes the processor to carry out the steps of the methods according to the invention.

The invention also relates to a computer-readable storage medium having a program recorded thereon; where the program makes the computer execute the method of the invention.

The invention further relates to a device comprising a processor adapted to store one or more sequence of instructions and to carry out at least one of the steps of the method according to the invention.

Unless specifically stated otherwise, as apparent from the following discussions, it is appreciated that throughout the specification discussions utilizing terms such as "computing", "calculating", or the like, refer to the action and/or processes of a computer or computing system, or similar electronic computing device, that manipulate and/or transform data represented as physical, such as electronic, quantities within the computing system's registers and/or memories into other data similarly represented as physical quantities within the computing system's memories, registers or other such information storage, transmission or display devices.

Embodiments of the present invention may include apparatuses for performing the operations herein. This apparatus may be specially constructed for the desired purposes, or it may comprise a general purpose computer or Digital Signal Processor ("DSP") selectively activated or reconfigured by a computer program stored in the computer. Such a computer program may be stored in a computer readable storage medium, such as, but is not limited to, any type of disk including floppy disks, optical disks, CD-ROMs, magnetic-optical disks, read-only memories (ROMs), random access memories (RAMs) electrically programmable read-only memories (EPROMs), electrically erasable and programmable read only memories (EEPROMs), magnetic or optical cards, or any other type of media suitable for storing electronic instructions, and capable of being coupled to a computer system bus.

The processes and displays presented herein are not inherently related to any particular computer or other apparatus. Various general purpose systems may be used with programs in accordance with the teachings herein, or it may prove convenient to construct a more specialized apparatus to perform the desired method. The desired structure for a variety of these systems will appear from the description below. In addition, embodiments of the present invention are not described with reference to any particular programming language. It will be appreciated that a variety of programming languages may be used to implement the teachings of the inventions as described herein.

In the sense of the invention "the manufacturing parameters" are the setting parameter of the different manufacturing devices involved in the manufacturing method.

Embodiments of the invention will now be described, by way of example only, and with reference to the following drawings in which:
- Figure 1 is an illustration of a flowchart of the steps comprised in a manufacturing method according to an embodiment of the invention;
- Figure 2 is an illustration of a flowchart of the steps comprised in a controlling method according to an embodiment of the invention;
- Figure 3 and 4 are examples of plots of gloss parameter over time; and
- Figure 5 is an illustration of a controlling device according to the invention.

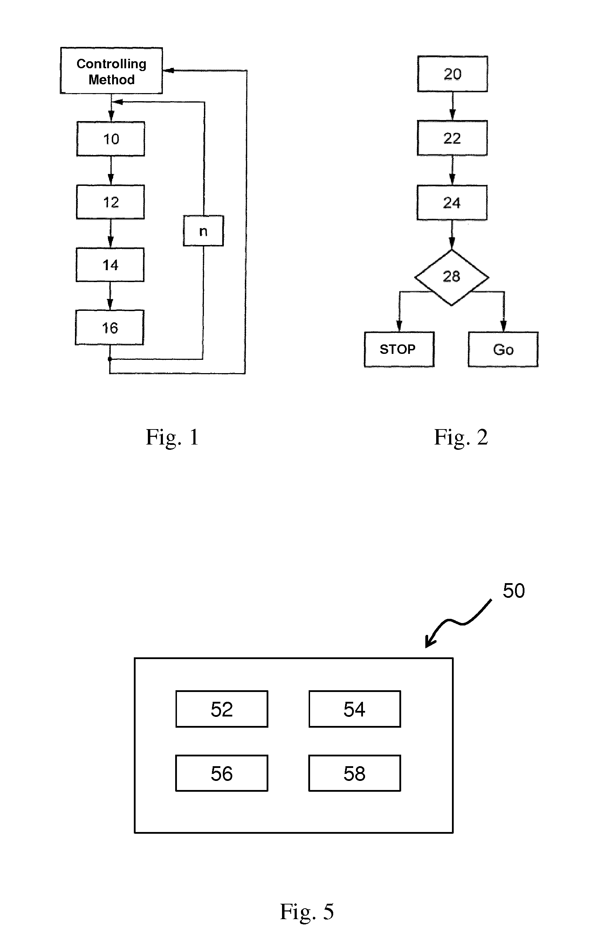

Figure 1 illustrated the steps of a manufacturing method according to one embodiment of the invention, i.e. susceptible of being controlled by a controlling method according to the invention.

In this embodiment of the invention, the manufacturing method for manufacturing a lens using a manufacturing device comprises the steps of:
- providing 10 a lens blank,
- blocking 12 the lens blank using a blocking device,
- machining 14 one surface of the lens blank using a machining device, for example a generator or 3D coarse grinding machining device, and
- polishing 16 the machined surface of the lens using a polisher.

The manufacturing steps 10 to 16 are repeated *n* times. After *n* repetitions of the manufacturing steps a controlling method according to the invention is processed.

The manufacturing method according to the invention can be used to manufacture any type of lens, for example ophthalmic lens such as progressive additional lens for example. The lens blank provided during the providing step 10 can be a semi-finished lens blank.

The blocking step 12 can be processed using any blocking devices known from the man skilled in the art.

The manufacturing step 14 consists in generating a desired design on the unfinished surface of the lens. Generators are common devices known from the man skilled in the art.

The polishing step 16 consists in smoothing the manufactured surface. Polishing devices are well known in the art.

According to other embodiments of a manufacturing method according to the invention, there is no step of blocking the lens blank and/or no step of polishing the machined surface of the lens.

A controlling method according to the invention will now be described with reference to figure 2.

In an embodiment of the invention, the controlling method for controlling a lens manufacturing method comprises the steps of:
a) providing 20 a master article manufactured according to a manufacturing method using a manufacturing device,
b) measuring 22 by using at least a gloss measuring device at least one gloss parameter of the master article of step a),
c) recording 24 the value of the gloss parameter,
d) repeating regularly step a) to c) and checking 28 the evolution of the gloss parameter over time.

In the sense of the invention, a gloss measuring device is an instrument which is used to measure specular reflection gloss of a surface. Such instrument is also called a glossmeter or gloss meter. Gloss is determined by projecting a beam of light at a fixed intensity and angle onto a surface and measuring the amount of reflected light at an equal but opposite angle.

It is well-known that different geometries are available for gloss measurement, each being dependent on the type of surface to be measured. For non-metals such as coatings and plastics the amount of reflected light increases with a greater angle of illumination, as some of the light penetrates the surface material and is absorbed into it or diffusely scattered from it depending on its color.

The gloss measuring device provides a quantifiable way of measuring gloss intensity ensuring consistency of measurement by defining the precise illumination and viewing conditions. The configuration of both illumination source and observation reception angles allows measurement over a small range of the overall reflection angle. The measurement results of a glossmeter are related to the amount of reflected light from a black glass standard with a defined refractive index. The ratio of reflected to incident light for the specimen, compared to the ratio for the gloss standard, is recorded as gloss units (GU).

According to the invention, the evolution of at least one parameter of the manufacturing device used during the lens manufacturing process is checked over time. For example, the manufacturing device is a generator or a polishing device.

In the sense of the invention, the parameter of the manufacturing device or the parameter of the manufacturing method, also called "manufacturing parameters", are the setting parameters of the different manufacturing devices involved in the manufacturing method, for example the speed of rotation of a grinding tool or the temperature of the device or the speed or translation of the three axis of the manufacturing devices.

Furthermore, the evolution over time of at least one gloss parameter of the master article is related with the evolution over time of the manufacturing parameter.

Preferably at least one correlation law is established between measured values of at least one gloss parameter and characterizations of the surface of the master article, for example the surface roughness.

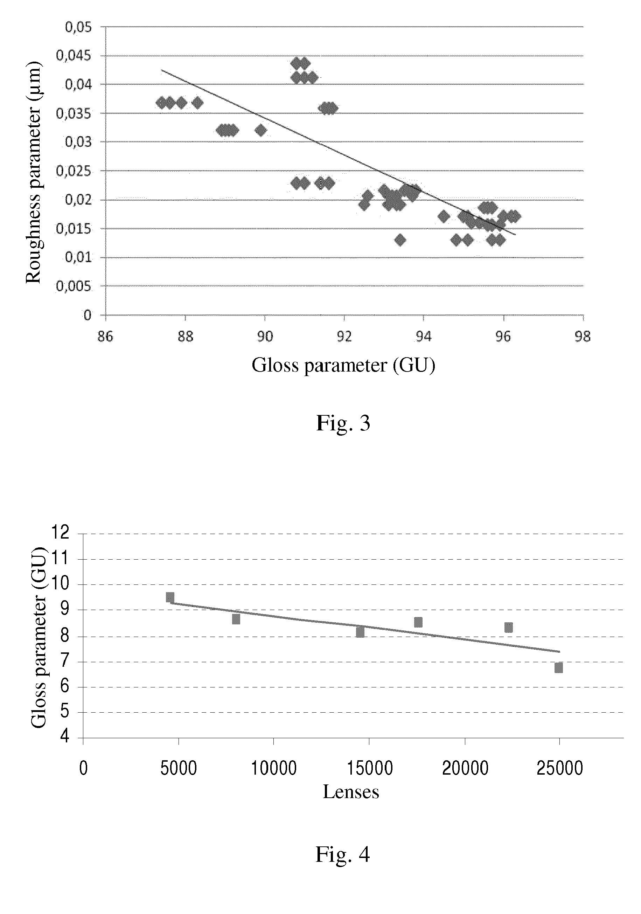

An example of such correlation between measured gloss values and the surface roughness of a master article is illustrated on figure 3. In this example, the master article is a geometric plan lens, ie a flat lens made of CR39.

Thanks to the method according to the invention and a strong correlation between the measurement of gloss and surface roughness of the master article, the roughness measurement is achieved with high accuracy especially when a positioning device having high accuracy is used. This gives reliable and repeatable measurements.

Preferably, the method according to the invention further comprises a step of determining at least one correlation law between the evolution of at least one measured gloss parameter and the evolution of a or each manufacturing parameter.

Advantageously, when a correlation can be found between the evolution of a measured parameter of a given master article and the evolution of a parameter of the manufacturing device, the controlling method can help identifying the cause of a drift or shift of a measured parameter.

For this purpose, the controlling method comprises the measurements and recording of certain manufacturing device parameters.

Figure 4 illustrates an example of plots of gloss parameter over time and the corresponding determined correlation law. In this example, the master article is a geometric plan lens, ie a flat lens made of CR39.

The checking of the evolution of the gloss parameter over time can comprise a step for comparing the measured gloss parameter with the determined correlation law and determined tolerance upper and lower thresholds.

Indeed, tolerance upper and lower thresholds can be predefined or determined in relation with the determined correlation law.

If the measured value of the gloss parameter is not between the tolerance lower and upper thresholds, the manufacturing method should be stopped in order to not manufacture defective lenses.

Preferably, the controlling method further comprises a step of generating an alert if the measured values are not between the predetermined tolerance lower and upper thresholds.

The master article can have any type of geometry allowing measuring the gloss parameter.

The master article can have a different geometrical and/or optical parameter than the lenses to be manufactured during the manufacturing method. Preferably, the master article is an optical article. For example, the master article can be an ophthalmic lens, a transparent flat lens...

Moreover, the master article can be made of a different material than the lenses to be manufactured during the manufacturing method. Preferably, the master article is transparent or semi-transparent. For example, the master article can be made of CR39, acrylic material...

Advantageously, the master article has a surface of revolution.

Preferably, the master article has at least a plan surface and the gloss parameter is measured on the plan surface of the master article.

For example, the master article is a master lens having at least a flat surface on which the gloss parameter is measured.

For another example, the master article is a plano-lens, ie a lens having zero refractive power and whose surfaces may both be flat or equally meniscus in shape.

For another example, the master article can be an optical prism and the gloss parameter can be measured on one of its two major surfaces.

Advantageously, the gloss parameter is measured in a zone around a predetermined point on a surface of the master article and preferably close to geometrical center. Nevertheless, the predetermined point is different from the geometrical center of the master article.

The size of the zone around the predetermined point is at least 15mmx4mm.

The predetermined point can depend on the manufacturing parameter.

Preferably, the master article is fixed manually in a predetermined position in order to measure the gloss parameter on its surface. In order to increase the reliability of the controlling method several measurements can be made on the surface of the master article and then a mean of the measurements can be calculated.

Preferably, the gloss parameter is measured at a predetermined point with an incidence angle between 60° and 90° and preferably about 85° on the surface of the master article.

In a preferred embodiment, the method for controlling a lens manufacturing method further comprises a step of fixing the master article in a predetermined position by using a lens positioning device.

Preferably, the master article can be blocked in a blocking plan, for example an horizontal plan and the lens positioning device can comprise means for moving the master article in the blocking plan along two axes X and Y an for moving along an axis Z perpendicular to the blocking plan.

Thanks to the correlation determined between the evolution of a measured gloss parameter and the evolution of a manufacturing parameter, it is possible to control a manufacturing method and thus to identify the cause of a drift or a shift of a manufacturing parameter.

Indeed, comparing over time the measured gloss parameter for a given manufacturing device parameters to the established correlation law allows checking the reliability of the manufacturing device and therefore the quality of the manufactured lenses.

Thus, it is possible to check the wear and tear rate of a specific manufacturing device, for example the grinding tool, the axes of the manufacturing devices...

Consequently, it is possible to adapt the frequency for adjustment or change of the manufacturing device when a drift of measurements with respect to the determined correlation law is observed.

Thus, the invention proposes an efficient and reliable method to assure the quality of the manufacturing devices used for manufacturing method and thus the quality of the manufactured lenses.

Another object of the invention is a control device 50 for controlling a lens manufacturing method adapted to implement the steps of the controlling method previously described.

With reference to figure 5, the control device 50 comprises at least a gloss measuring device 52 adapted to measure at least one gloss parameter of a master article and recording means 54 adapted to record over time the values of the measured gloss parameters and of at least one parameter of the manufacturing device used during the lens manufacturing process.

The master article can be manufactured according to a manufacturing process using a manufacturing device.

Preferably, the control device 50 further comprises determining means 56 adapted to determine a correlation law between the evolution of a measured gloss parameter and the evolution of a parameter of the manufacturing device.

According to a preferred embodiment, the control device 50 further comprises a lens positioning device 58 adapted to fix a master article in a predetermined position.

Preferably, the lens positioning device comprises means adapted for blocking the master article in a blocking plan, for example in a horizontal plan. Furthermore, the lens positioning device comprises means for moving the master article in the blocking plan along two axes X and Y an for moving along an axis Z perpendicular to the blocking plan.

Such a lens positioning device allows using master article having different thickness or diameter.

Preferably, the gloss measuring device is in mutual contact with the master article where the measurements should be done.

Another controlling method according to the invention will now be described.

In an embodiment of the invention, the other controlling method for controlling a lens manufacturing method comprises the steps of:
a) receiving a set of data corresponding to values of at least one measured gloss parameter and of at least one parameter of the manufacturing device used during the lens manufacturing process, and
b) comparing the received set of data with a predetermined correlation law and predetermined tolerance upper and lower thresholds.

Preferably, the other controlling method further comprises a step of generating an alert if the received measured values are not between the predetermined tolerance lower and upper thresholds.

## Claims

1. Method for controlling a lens manufacturing method comprising the steps of:
a) providing (20) a master article manufactured according to a manufacturing method using a manufacturing device,
b) measuring (22) by using at least a gloss measuring device at least one gloss parameter of the master article of step a),
c) recording (24) the value of the gloss parameter,
d) repeating regularly step a) to c) and checking (28) the evolution of the gloss parameter over time,
wherein:
- the evolution of at least one parameter of the manufacturing device and/or of the manufacturing method used during the lens manufacturing method is checked over time, and
- the evolution over time of at least one gloss parameter of the master article is related with the evolution over time of the at least one parameter of the manufacturing device and/or of the manufacturing method.

2. The method according to claim 1, further comprises a step of fixing the master article of step a) in a predetermined position by using a lens positioning device.

3. The method according to claim 1 or 2, further comprises a step of determining a least one correlation law between the evolution of a measured gloss parameter and the evolution of a parameter of the manufacturing device and/or of the manufacturing method.

4. The method according to any of the preceding claims, further comprises a step of determining at least one correlation law between at least one measured gloss parameter and the surface roughness of the master article.

5. The method according to any of the preceding claims, wherein the or each of the at least one gloss parameter is measured in a zone around a predetermined point on a surface of the master article.

6. The method according to any of the preceding claims, wherein the or each of the at least one gloss parameter is measured at a predetermined point with an incidence angle between 60° and 90° and preferably about 85° on the surface of the master article.

7. The method according to any of the preceding claims, wherein the master article has at least a plan surface and the or each of the at least one gloss parameter is measured on the plan surface of the master article.

8. The method according to any of the preceding claims, wherein the manufacturing device is a generator or a polishing device.

9. Method for controlling a lens manufacturing method comprising the steps of:
a) receiving a set of data corresponding to values of at least one measured gloss parameter and of at least one parameter of the manufacturing device used during the lens manufacturing process, and
b) comparing the received set of data with a predetermined correlation law and predetermined tolerance upper and lower thresholds.

10. The method for controlling a lens manufacturing method according to claim 9, further comprises a step of generating an alert if the received measured values are not between the predetermined tolerance lower and upper thresholds.

11. Manufacturing method for manufacturing a lens using a manufacturing device comprising the steps of:
- providing a lens blank,
- blocking the lens blank,
- surfacing at least one surface of the lens blank, **characterized in that** the manufacturing method is checked by a method according to any of claims 1 to 10.

12. A control device for controlling a lens manufacturing method, the device comprising:
- at least a gloss measuring device adapted to measure at least one gloss parameter of a master article, the master article being manufactured according to a manufacturing process using a manufacturing device,
- a recording mean adapted to record over time the values of the measured gloss parameters and of at least one parameter of the manufacturing device used during the lens manufacturing process.

13. The control device according to claim 12, a determining mean adapted to determine at least one correlation law between the evolution of a measured gloss parameter and the evolution of a parameter of the manufacturing device.

14. A computer program product comprising one or more stored sequences of instructions that are accessible to a processor and which, when executed by the processor, causes the processor to carry out the steps of any of claim 1 to 10.

15. A computer readable medium carrying one or more sequences of instructions of the computer program product of claim 14.
